# FASCICULE DE BREVET EUROPEEN

(11) **EP 3 830 492 B1**
(45) Date de publication et mention de la délivrance du brevet: **27.03.2024**
(21) Numéro de dépôt: 19752447.3
(22) Date de dépôt: 01.08.2019
(51) Int. Cl.: F24F 8/10, F24F 8/15, F24F 8/22, F24F 8/80, F24F 11/72, F24F 8/167

(54) **ENSEMBLE DE PURIFICATION ET DE DÉPOLLUTION D'AIR ET PROCÉDÉ DE PILOTAGE D'UN TEL ENSEMBLE**
ANORDNUNG ZUR REINIGUNG UND ZUR LUFTVERSCHMUTZUNGSKONTROLLE UND VERFAHREN ZUR STEUERUNG SOLCH EINER ANORDNUNG
ASSEMBLY FOR PURIFYING AND FOR AIR POLLUTION CONTROL AND METHOD FOR CONTROLLING SUCH AN ASSEMBLY

(30) Priorité: 03.08.2018 FR 1857306
(43) Date de publication de la demande: 09.06.2021
(73) Titulaire: AIR-FISCIENCE, 13600 La Ciotat (FR)
(72) Inventeur: BRUNO, Paolo, 92110 CLICHY-la-GARENNE (FR); LLORET, Philippe, 37550 SAINT-AVERTIN (FR)
(74) Mandataire: Germain Maureau
(86) Numéro de dépôt international: PCT/EP2019/070764
(87) Numéro de publication internationale: WO 2020/025747

(56) Documents cités:
- EP-A1- 0 211 383
- EP-A1- 3 121 524
- WO-A1-2007/086726
- WO-A1-2011/138569
- WO-A2-2015/191669
- GB-A- 2 414 197
- US-A- 5 261 934

## Description

La présente invention concerne les ensembles de traitement de fluide gazeux, et plus particulièrement les ensembles de purification et de dépollution d'air.

Elle trouve application dans tous les secteurs dans lesquels il existe un besoin de maîtriser la qualité de l'air ambiant d'un espace confiné et s'applique particulièrement à la purification de l'air intérieur dans tous lieux de vie, privés ou collectifs tels que les bâtiments d'habitation, les grandes surfaces, les aéroports, les bureaux, les établissements médico-sociaux, les crèches, les hôpitaux, les commerces, les maisons individuelles, les transports, les salles de gymnastique.

Pour lutter contre la pollution intérieure d'un espace confiné, il est essentiel de diffuser un air aussi pur que possible c'est à dire exempt d'impuretés telles que les biocontaminants comme les micro-organismes (virus et bactéries), les allergènes et les particules fines, ou encore les gaz toxiques (COV composés organiques volatils - Formaldéhyde, toluène, benzène, etc) et les odeurs.

Ainsi, on connaît des ensembles de purification d'air fixes ou transportables pour filtrer l'air ambiant d'un lieu qui reposent sur un système d'aspiration d'air associé à un plusieurs filtres en combinaison et notamment des moyens de traitement de l'air pollué par photocatalyse.

Or, il arrive souvent que ces ensembles de filtration aient une perte de charge rapide et, par conséquent, une faible durée de vie.

Pour augmenter la durée de vie d'un tel ensemble, on peut limiter les surfaces d'échanges entre l'air pollué et les filtres à particules, au détriment de l'efficacité de la purification de l'air pollué.

Par ailleurs, l'efficacité de la purification de l'air pollué est également affectée par l'entretien qui est fait de l'ensemble de purification d'air.

Un ensemble de purification d'air, pour conserver son efficacité maximale, a besoin d'un entretien régulier de ses différentes parties internes, ce qui n'est souvent pas envisageable compte tenu de la complexité des ensembles de purification d'air.

Ce non entretien limite également leur durée de vie.

Par ailleurs, pour améliorer l'efficacité d'un ensemble de purification d'air, on peut également multiplier les filtres et augmenter les surfaces d'échanges entre l'air pollué et les filtres.

Ce type d'ensemble de purification d'air présente alors un encombrement important.

Un compromis entre efficacité de purification sur des classes variées de polluants, facilité d'entretien, économie d'espace reste toujours difficile avec les ensembles de purification d'air connus.

L'état de la technique peut également être illustré par les enseignements du document GB 2 414 197 A qui divulgue un ensemble de purification d'air comprenant plusieurs cartouches de filtration et un by-pass entre les cartouches, afin d'autoriser une circulation au travers des cartouches ou au travers du by-ass, selon le taux de pollution.

L'objet de la présente invention est de proposer une solution qui corresponde à une évolution des ensembles de purification d'air connus permettant résoudre tout ou partie des problématiques précitées et notamment de permettre dépollution de l'air complète garantissant un minimum de perte de charge en étant adapté au niveau de pollution de l'air de la pièce.

À cet effet, l'invention concerne un ensemble de purification d'air tel que définit dans la revendication 1. En particulier, il comprend:
- une enceinte comprenant une entrée d'air pour le passage d'un air pollué, une sortie d'air pour le passage d'un air purifié et une embase munie d'un moyen pour réaliser une circulation d'air forcée,
- une pluralité de cartouches amovibles logées dans ladite enceinte, lesdites cartouches étant adaptée pour être traversées en parallèle par l'air pollué circulant dans l'enceinte pour le purifier,

chacune des cartouches étant munie, à son entrée, d'un mécanisme d'ouverture et de fermeture configurable entre une configuration ouverte et une configuration fermée permettant respectivement de laisser l'air circuler ou bloquer la circulation d'air à travers la cartouche associée,
ledit ensemble de purification d'air comprenant en outre :
   - un système de mesure pour mesurer des paramètres représentatifs de la qualité de l'air à purifier;
   - des moyens de commande reliés au système de mesure et au mécanisme d'ouverture et de fermeture de chacune des cartouches, lesdits moyens de commande étant configurés pour commander les mécanismes d'ouverture et de fermeture afin d'ouvrir et fermer individuellement, par exemple distinctement ou en combinaison, les cartouches de sorte à adapter le débit d'air en fonction de paramètres représentatifs de la qualité de l'air à purifier.

Grâce à ces caractéristiques, l'ensemble de purification d'air est polyvalent et les performances de purification peuvent être adaptées en fonction de l'air des lieux où il est placé et des besoins spécifiques en fonction de ses particularités, avec de telles cartouches amovibles qui sont des cartouches de purification et de dépollution d'air.

Avantageusement, les cartouches sont disposées seules sur une section intermédiaire d'écoulement de l'air dans l'enceinte, de sorte que l'air pollué entrant dans l'enceinte traverse ladite section intermédiaire en circulant uniquement à travers la ou les cartouches dont le mécanisme d'ouverture et de fermeture est en configuration ouverte.

Ainsi, les cartouches ne sont pas contournées ni court-circuitées, pour former des passages obligés à l'écoulement de l'air à purifier, ce qui offre un écoulement optimisé en terme de débit et sans perte de charge dans une voie de contournement.

De manière avantageuse, les cartouches sont placées parallèlement les unes par rapport aux autres selon des directions respectives parallèles à un axe principal de circulation de l'air à purifier, et les cartouches sont réparties symétriquement autour de cet axe principal.

Ainsi, les cartouches sont réparties régulièrement autour de cet axe principal, offrant un équilibrage des débits d'air circulant dans les cartouches et donc une meilleure gestion de la purification mis en oeuvre par ces cartouches. Incidemment, cet équilibrage permet de mieux maîtriser l'usure des cartouches et ainsi de mieux maîtriser le moment où celles-ci doivent être remplacées.

Selon une réalisation particulière, l'axe principal est concentrique par rapport à l'entrée et la sortie de l'enceinte, procurant ainsi un écoulement optimisé sans perte de charge.

Selon une configuration technique avantageuse, chacune des cartouches comprend au moins une cellule photocatalytique consommable présentant un filtre photocatalytique et une source lumineuse destinée à irradier ledit filtre photocatalytique.

Un tel ensemble est également facile d'entretien tout en offrant une efficacité de traitement par photocatalyse d'un air pollué améliorée.

Selon l'invention, l'ensemble de purification d'air comprend au moins un module de filtration aval disposé en aval des cartouches, en regard de la circulation de l'air dans l'ensemble.

Le ou les modules de filtration aval permettront ainsi d'améliorer la filtration et donc la purification et la dépollution de l'air, le tout dans un ensemble compact et efficace.

Selon l'invention, le module de filtration aval est amovible entre une position active où il est disposé sur le chemin de l'air circulant dans l'ensemble de purification de sorte à être traversé par cet air et une position inactive où il n'assure pas la filtration de l'air, ces positions active et inactive étant commandées par les moyens de commande en fonction d'au moins un paramètre représentatif de la qualité de l'air à purifier.

Une telle caractéristique est particulièrement avantageuse étant donné qu'il est possible d'adapter l'utilisation du (ou de chaque) module de filtration aval en fonction des besoins spécifiques de la pièce à l'intérieur de laquelle l'air est purifié, permettant ainsi de diminuer les pertes de charge qui seraient causées par la présence du (ou de chaque) module de filtration aval dans le cas où ce module de filtration aval ne trouvait pas d'utilité.

De préférence, l'ensemble des modules de filtration aval sont amovibles entre la position active et la position inactive.

Dans une réalisation particulière, au moins un module de filtration aval est un module de filtration chimique en aval des cartouches, en regard de la circulation de l'air dans l'ensemble.

Selon une possibilité, le système de mesure comprend un moyen de mesure d'un taux de pollution chimique, et le module de filtration chimique est amovible entre une position active et une position inactive (comme décrit ci-dessus), ces positions active et inactive étant commandées par les moyens de commande en fonction de ce taux de pollution chimique.

Selon une autre possibilité, le moyen de mesure d'un taux de pollution chimique est conformé pour mesurer une présence d'au moins un polluant choisi parmi les composés organiques volatils, les composés organiques halogènes volatils, les aldéhydes, l'ammoniac, le sulfure d'hydrogène, les mercaptans, les monoxydes et dioxyde de carbone

Dans une autre réalisation particulière, au moins un module de filtration aval est un module de filtration aval est un module de post filtration particulaire en aval des cartouches, en regard de la circulation de l'air dans l'ensemble.

Selon une possibilité, le système de mesure comprend un moyen de mesure d'un taux de pollution aux particules fines, et le module de post filtration particulaire est amovible entre une position active et une position inactive (comme décrit ci-dessus), ces positions active et inactive étant commandées par les moyens de commande en fonction de ce taux de pollution aux particules fines.

Avantageusement encore, l'ensemble de purification d'air comprend un module de préfiltration particulaire en amont des cartouches, en regard de la circulation de l'air dans l'ensemble.

Dans une variante, le module de préfiltration particulaire en amont des cartouches peut également être amovible entre une position active où il est disposé sur le chemin de l'air circulant dans l'ensemble de purification de sorte à être traversé par cet air et une position inactive où il n'assure pas la filtration de l'air, ces positions active et inactive étant commandées par les moyens de commande en fonction d'au moins un paramètre représentatif de la qualité de l'air à purifier.

Dans une configuration préférée, les mécanismes d'ouverture et de fermeture sont des clapets. De tels clapets, de préférence circulaires et pivotant en rotation autour d'un axe situé sur un diamètre du clapet, permettent d'offrir un moyen simple, efficace et facile à mettre en oeuvre pour l'ouverture et la fermeture des cartouches de filtration amovibles.

Avantageusement, une distance axiale dans une direction de circulation du flux d'air entre le module de préfiltration particulaire amont et le moyen pour réaliser la circulation d'air forcée est sensiblement égale à une distance entre l'entrée des cartouches et ledit moyen pour réaliser la circulation d'air forcée.

Selon l'invention, la notion de « sensiblement égale » recouvre une égalité à plus ou moins 10% près.

Avantageusement, la distance axiale dans la direction de circulation du flux d'air entre le module de préfiltration particulaire amont et le moyen pour réaliser la circulation d'air forcée est sensiblement égale à un diamètre d'une section cylindrique prise au droit du moyen pour réaliser la circulation d'air forcée.

Selon un aspect avantageux, l'invention concerne aussi une caractéristique selon laquelle les cartouches sont assemblées au sein d'un bloc cartouches, ce bloc cartouches comprenant un carter délimitant une enceinte intermédiaire à l'intérieur de laquelle sont logées les cartouches de sorte que lesdites cartouches traversent ladite enceinte intermédiaire en parallèle les unes par rapport aux autres et sont maintenues solidaires ensemble.

Cela est particulièrement avantageux, notamment dans le cadre du changement des cartouches. Il est alors possible de rendre le bloc cartouche amovible et de manipuler l'ensemble des cartouches en même temps et facilement. Les cartouches de filtration étant des éléments consommables, cela facilite en outre la maintenance.

Par ailleurs, un autre avantage est qu'il peut équiper un ensemble de purification d'air tel que décrit ci-avant dans une installation neuve, mais peut aussi être installé sur un circuit de purification d'air existant, permettant ainsi d'offrir ainsi un ensemble de purification d'air dans lequel lesdites cartouches sont configurées pour être traversées en parallèle par l'air pollué circulant dans l'enceinte pour le purifier, les cartouches étant ouvertes et/ou fermées individuellement par les moyens de commande de sorte à adapter le débit d'air de l'ensemble en fonction de paramètres prédéterminés de la qualité de l'air à purifier.

Selon un autre aspect, l'invention concerne aussi un procédé de pilotage tel que définit dans la revendication 13. En particulier, c'est un procédé de pilotage d'un ensemble de purification d'air selon l'invention, au cours duquel les moyens de commande reçoivent, en provenance du système de mesure, des mesures des paramètres représentatifs de la qualité de l'air à purifier, et les moyens de commande commandent les mécanismes d'ouverture et de fermeture des cartouches pour ouvrir et fermer distinctement ou en combinaison les cartouches de sorte à adapter le débit d'air en fonction de paramètres représentatifs de la qualité de l'air à purifier.

D'autres caractéristiques et avantages de l'invention ressortiront à la lecture de la description qui suit, donnée uniquement à titre d'exemple, en référence aux figures annexées, qui illustrent :
- figure 1, une vue schématique d'un ensemble de purification d'air, selon un mode de réalisation ;
- figure 2, une vue schématique, en coupe transversale, d'un bloc cartouche d'un ensemble de purification d'air, selon ce mode de réalisation ;
- figure 3, une vue schématique, en coupe transversale, d'une enceinte d'un ensemble de purification d'air, selon ce mode de réalisation;
- figure 4, une vue en coupe et en perspective d'une cartouche selon un mode de réalisation ;
- figure 5, une vue partielle d'un ensemble de purification d'air, selon un mode de réalisation ;
- figure 6, un logigramme d'un procédé de pilotage d'un ensemble de purification d'air selon un mode de réalisation.

Sur l'ensemble de ces figures, des références identiques ou analogues désignent des organes ou ensembles d'organes identiques ou analogues.

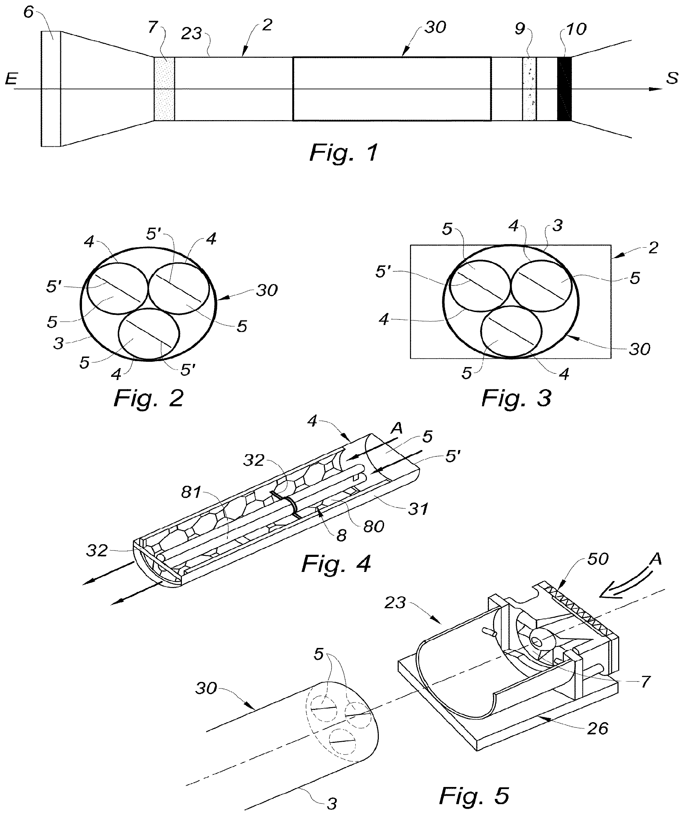

On a représenté, sur les schémas illustrés sur les figures 1 à 3, les différentes parties constitutives d'un ensemble de purification d'air 1 selon un mode de réalisation de la présente invention.

De façon générale et en référence à la Figure 1, cet ensemble de purification 1 se présente sous la forme d'une enceinte 2 qui comporte une entrée d'air « E » traversant ou léchant une paroi de ladite enceinte 2 par laquelle le mélange d'air et de polluants éventuels pénètre à l'intérieur de l'ensemble 1 de purification formant réacteur de purification et de dépollution de l'air.

L'enceinte 2 comprend également une sortie d'air « S » pour le passage de l'air traité et purifié.

L'enceinte 2 comprend également une embase 23 comprenant au moins des moyens 7 pour réaliser une circulation d'air forcé à l'intérieur de l'enceinte 2 adaptés aux volumes d'air à traiter, lesquels comprennent par exemple au moins un ventilateur.

Le ventilateur 7 est de préférence un ventilateur axial comprenant un variateur de fréquence qui couple efficacité de débit et de perte de charge et économie d'énergie.

Un tel ventilateur peut être remplacé par une turbine, tel qu'un ventilateur centrifuge, et/ou un ou des ventilateur(s) inerte(s) utilisés dans les applications médicales.

L'ensemble de purification d'air 1 comprend, en outre, une pluralité de cartouches 4 amovibles logées dans l'enceinte 2, lesdites cartouches 4 étant adaptée pour être traversées en parallèle par l'air pollué circulant dans l'enceinte pour le purifier, et lesdites cartouches 4 formant des cartouches de purification et de dépollution d'air.

Les cartouches 4 sont ici logées ensemble dans une enceinte intermédiaire 3, cette enceinte intermédiaire 3 coopérant avec l'embase 23 afin d'être logée dans ladite enceinte 2 principale et adaptée pour être traversée par l'air pollué pour le purifier.

Plus précisément, les cartouches 4 sont disposées seules sur une section intermédiaire d'écoulement de l'air dans l'enceinte 2, autrement dit cette enceinte intermédiaire 3 est disposée dans cette section intermédiaire. Aussi, pour traverser cette section intermédiaire, l'air ne peut passer qu'au travers des cartouches 4, aucune voie d'écoulement de court-circuitage (ou « by-pass ») n'étant prévue dans ou en parallèle de cette section intermédiaire pour contourner ou éviter les cartouches 4.

L'ensemble des cartouches 4 formant un bloc cartouches 30 et comprend un carter délimitant l'enceinte intermédiaire 3 à l'intérieur de laquelle sont logées les cartouches 4 de sorte que lesdites cartouches 4 traversent ladite enceinte intermédiaire 3 en parallèle les unes par rapport aux autres, et sont maintenues solidaires ensemble. Les entrées des cartouches 4 sont affleurantes entre elles et à une face d'entrée du bloc cartouche 30. Il en est de mêmes pour les sorties des cartouches 4 qui sont affleurantes entre elles et à une face de sortie du bloc cartouche 30

En d'autres termes, l'ensemble des cartouches 4, logées dans l'enceinte intermédiaire 3, forme avec elle un bloc cartouche 30, lequel est logé dans un logement de l'enceinte 2, prévu sur la section intermédiaire, dont la forme et les dimensions sont adaptées pour recevoir ledit bloc cartouche 30 afin qu'il coopère avec l'embase 23 pour être traversée par l'air pollué pour le purifier.

Ce bloc cartouche 30 est de préférence cylindrique et placé de préférence de façon concentrique par rapport à l'axe principal de circulation du flux d'air à purifier, et de préférence encore de façon concentrique par rapport à l'entrée E et/ou la sortie S de l'ensemble 1 de purification. Le cas où le bloc cartouche 30 est placé de façon concentrique par rapport à l'entrée E et la sortie S de l'enceinte 2 de l'ensemble 1 de purification permet de réduire au mieux les pertes de charge.

Les cartouches 4 sont placées parallèlement les unes par rapport aux autres de sorte à être disposées en parallèle dans ce bloc cartouche 30. De cette manière, les cartouches 4 sont adaptées pour être traversées en parallèle par l'air pollué circulant dans l'enceinte 2 pour le purifier.

Ainsi, les cartouches 4 sont placées parallèlement les unes par rapport aux autres selon des directions respectives parallèles à un axe principal de circulation de l'air à purifier à l'intérieur de l'enceinte 2 et, comme visible aux Figures 2 et 3, les cartouches 4 sont réparties symétriquement autour de cet axe principal, offrant ainsi un équilibre en terme de débit dans la circulation de l'air à travers les cartouches 4 ; cet axe principal étant concentrique par rapport à l'entrée E et la sortie S de l'enceinte 2.

Chacune des cartouches 4 est munie, à son entrée, d'un mécanisme d'ouverture et de fermeture 5 configurable entre une configuration ouverte et une configuration fermée permettant respectivement de laisser l'air circuler ou bloquer la circulation d'air à travers la cartouche associée, les mécanismes d'ouverture et de fermeture 5 étant commandé par des moyens de commande configurés pour ouvrir et fermer distinctement ou en combinaison les cartouches 4 de sorte à adapter le débit d'air en fonction de paramètres prédéterminés de la qualité de l'air à purifier. De cette manière, l'air pollué entrant dans l'enceinte 2 traverse la section intermédiaire en circulant uniquement à travers la ou les cartouches 4 dont le mécanisme d'ouverture et de fermeture 5 est en configuration ouverte.

Ainsi, l'ensemble de purification d'air 1 comprend en outre un système de mesure pour justement mesurer ces paramètres représentatifs de la qualité de l'air à purifier, et les moyens de commande qui sont reliés à la fois au système de mesure et au mécanisme d'ouverture et de fermeture 5 de chacune des cartouches 4.

De cette manière, l'ensemble de purification d'air est polyvalent et les performances de purification peuvent être adaptées en fonction de l'air des lieux où il est placé et des besoins spécifiques en fonction de ses particularités.

Son procédé de pilotage sera décrit plus en détail en référence à la figure 4.

Ce bloc cartouche 30 à travers laquelle on organise la circulation forcée de l'air pollué pour le purifier comprend des éléments de filtration de l'air pollué consommables, c'est-à-dire des éléments destinées à être changés. Selon les configurations, un utilisateur pourra changer le bloc cartouche 30 ou bien les cartouches 4 indépendamment les unes des autres.

Les moyens de filtration comprennent au moins une cellule photocatalytique 8 présentant un filtre photocatalytique 80 et une source lumineuse 81 destinée à irradier ledit filtre (voir la figure 4).

Cet ensemble de purification 1 est destiné à équiper une système d'aération et ou de ventilation approprié qui peut être raccordé à son entrée et sa sortie.

L'enceinte 2 présente un logement de forme et de dimensions adaptées pour recevoir le bloc cartouche 30 de filtration de forme cylindrique, comme visible sur la figure 3.

Elle présente, au voisinage de l'entrée, l'embase 23, de section sensiblement circulaire.

Cette embase 23 renferme, comme illustré sur la figure 5, au moins un groupe moto-ventilateur 7 formant moyen pour assurer la circulation de l'air pollué A forcée dans l'enceinte 2 à travers l'ensemble de purification 1 et à travers le bloc cartouche 30.

Ce groupe moto-ventilateur 7 peut comprendre un ou plusieurs ventilateurs ménagés dans l'embase 23 alimentés par des moyens adaptés décrits plus loin pour assister au brassage de l'air pollué A destiné à être purifié à travers la cartouche 30 filtrante.

Ce groupe moto-ventilateur 7 a une vitesse variable en fonction des besoins de la purification d'air du lieu où est placé l'ensemble, ceci afin de maîtriser le débit d'air traversant l'ensemble de purification 1.

En outre, l'embase 23 comprend un système électronique de commande 26 (visible sur la figure 5) de l'ensemble de purification d'air 1.

Ce système électronique de commande peut comprendre des moyens de mise en marche de l'ensemble de purification d'air 1.

Il peut également comprendre des moyens de déclenchement automatique dudit ensemble 10 lorsque le taux de pollution de l'air du lieu dans lequel est placé l'ensemble 1 atteint un certain seuil de pollution, ces moyens de déclenchement étant associés à des capteurs adaptés présents dans l'embase 23.

Dans un exemple non limitatif de la présente invention, on peut détecter en continue le taux de micro particules en suspension dans l'air.

Par ailleurs, comme illustré sur la figure 1, les moyens de filtration de l'air pollué entrant dans l'ensemble de purification 1 sont répartis en plusieurs modules filtrants disposés successivement sur le trajet de l'air A à purifier.

Il est à noter que chaque cartouche 4 filtrante et/ou bloc cartouche 30 peut être spécifique à l'air A à purifier.

Ainsi un opérateur pourra remplacer un bloc cartouche 30 par un autre en fonction des besoins de purification de la pièce dans laquelle est placé l'ensemble de purification d'air 10.

Avantageusement, l'ensemble 1 de purification selon l'invention comprend des modules filtrants associés à une préfiltration particulaire 6 en amont des cartouches 4, en regard de la circulation de l'air dans l'ensemble 1. Ce premier module filtrant 6 comprend un préfiltre destiné à piéger les polluants physiques tels que les poussières ou particules.

Ce module de préfiltration particulaire 6 est de préférence mis en place au sein de l'enceinte 2 en amont du ventilateur 7 (voir figure 1) ou en aval de ce dernier mais toujours en amont du bloc cartouche 30 et/ou de la cellule photocatalytique 8.

Plus précisément, comme illustré sur la figure 1, ce module de préfiltration particulaire 6 est placé dans la cartouche 30 de filtration au niveau de l'entrée d'air pollué, et mis en place de façon concentrique avec les éléments de la cellule photo catalytique 60, qui sera décrite plus précisément plus loin.

Ce module de préfiltration particulaire 6 offre l'avantage de piéger au maximum les particules avant l'entrée de l'air A dans la partie photocatalytique des cartouches 4 filtrantes et de protéger les sites actifs de ces dernières.

Ce module de préfiltration particulaire 6 peut être à adsorbant quelconque. On peut citer comme exemple, un filtre à charbon actif ou encore un filtre à haute performance de type HEPA.

Toutefois, le module de préfiltration particulaire 6 peut être formé par une combinaison de plusieurs filtres différents de sorte que des substances variées puissent être éliminés de l'air le traversant.

Dans un exemple de réalisation de la présente invention, le pré-filtre du module de préfiltration particulaire présente une épaisseur de l'ordre de 20 mm à 100 mm.

Les cartouches 4 forment quant à elles un second module filtrant. Chaque cartouche 4 comprend un corps cylindrique 31 creux étanche dans lequel est placé au moins un filtre photocatalytique 80 et une source lumineuse 81 destinée à irradier ledit filtre.

Le bloc cartouche 30 est adapté pour se fixer de façon amovible à l'embase 23 de l'enceinte 2 à une extrémité pour coopérer avec le groupe moto-ventilateur 24.

Chacune des cartouches s'étend longitudinalement par rapport à l'axe principal de circulation de l'air, c'est-à-dire parallèlement par rapport à cet axe, de sorte à minimiser les pertes de charge.

Chaque cartouche 3 présente une entrée située à une première extrémité du corps cylindrique 31 en communication avec le groupe moto-ventilateur 7 et une sortie située à une deuxième extrémité, opposée à la première extrémité formant entrée, c'est-à-dire encore à l'extrémité opposée au groupe moto-ventilateur 7.

Les entrées de chacune des cartouches, au nombre de 3 dans ce mode de réalisation, est munie d'un mécanisme d'ouverture et de fermeture 5 permettant respectivement de laisser l'air circuler ou bloquer la circulation d'air à travers la cartouche associée, ce mécanisme étant en particulier un clapet 7.

Chacun des clapets présente une forme adaptée pour coopérer avec un orifice d'entrée de la cartouche 4 associée. Dans la configuration illustrée, les clapets 5 présentent la forme d'un disque articulé en rotation autour d'un axe 5', en particulier autour d'un axe diamétral dudit clapet, c'est-à-dire traversant le disque du clapet selon un axe traversant un diamètre de sa forme en disque. Quelle que soit la forme du clapet 5, celui-ci est de préférence articulé en son centre pour une meilleure efficacité et une consommation énergétique plus faible.

Pour garantir le minimum de perte de charge pour un maximum de débit, la distance axiale dans la direction de circulation du flux d'air entre le module de préfiltration particulaire 6 amont et le moyen 7 pour réaliser la circulation d'air forcée, à savoir le groupe moto-ventilateur 7, est sensiblement égale à la distance entre l'entrée des cartouches 4 et ledit moyen pour réaliser la circulation d'air forcée 7, et de préférence égale au diamètre d'une section cylindrique de l'enceinte 2 dans laquelle ils sont logés prise au droit du ventilateur, correspondant en d'autres termes au diamètre du ventilateur 7.

Au moins une des cartouches, de préférence chacune des cartouches, comprend, dans sa concavité, une ou plusieurs sources lumineuses 81.

Sur la figure 4, dans un exemple non limitatif, deux sources lumineuses 81 parallèles s'étendent sur près de toute la longueur du cylindre 31 au centre de ce dernier. Elles irradient ainsi sur toute la longueur du cylindre 31.

Le filtre catalytique 80 quant à lui est sous la forme d'un support fibreux revêtu d'un agent photocatalyseur.

La cellule photocatalytique 8 est disposée, en regard de la circulation de l'air A, en aval du premier module filtrant formé par le module de préfiltration particulaire 6, concentriquement par rapport à ce dernier sur la figure 4, de sorte que des produits intermédiaires pouvant se former par le préfiltre 6 puissent être éliminés.

La photocatalyse se produit à la surface de l'agent photocatalyseur, ce dernier étant destiné à adsorber et détruire les molécules de gaz polluants qui traversent l'ensemble de purification 1 grâce à des réactions d'oxydation réduction sous l'effet d'un rayonnement produit par la source lumineuse 81.

Tel qu'illustré la figure 4, le filtre catalytique 80 est mis en place de façon concentrique avec les sources lumineuses 81 et s'étend sur toute la longueur du cylindre 31.

Ainsi, le filtre photocatalytique 80 présente une forme et des dimensions adaptées pour être logé sur la circonférence interne du cylindre 31 de la cartouche 3, le long de ce dernier.

Le fait d'entourer les sources lumineuses 81 avec le filtre catalytique 80, offre au flux d'air qui lèche et/ou traverse le filtre 80, une grande surface de traitement dans un espace restreint et compact et offre, également, une surface d'échange importante entre le flux d'air à purifier et le filtre 80.

Cette surface d'échange entre l'air à purifier et le filtre photocatalytique 80 est accentuée par un flux d'air turbulent qui peut être créé par la présence du mécanisme d'ouverture et de fermeture 5 permettant respectivement de laisser l'air circuler ou bloquer la circulation d'air à travers la cartouche associée.

L'efficacité de la photocatalyse est ainsi améliorée.

Pour maintenir la ou les source(s) lumineuse(s) 81 de façon globalement concentrique par rapport au filtre catalytique 80, le cylindre 31 de la cartouche 4 comprends des broches de fixations radiales 32 par rapport audit corps cylindriques, à l'intérieur de celui-ci (voir la figure 4). De préférence, une broche de support 32 est positionnée au niveau de la deuxième extrémité formant sortie de la cartouche 4 et une autre broche de support 32 est située approximativement entre l'entrée et la sortie de la cartouche 4.

Avantageusement, l'agent photocatalyseur est le dioxyde de titane TiO₂.

Bien entendu, d'autres agents catalyseurs pourraient être utilisés dans le cadre de la présente invention, tels que, notamment, d'autres oxydes métalliques, des oxydes alcalino-terreux, des oxydes d'actinides ou des oxydes de terres rares.

De préférence, le support de l'agent photocatalyseur est un média fibreux transparent au rayonnement utilisé ou tout autre support adapté à la photocatalyse.

En combinaison avec un tel agent photocatalyseur, les sources lumineuses 81 sont aptes à émettre un rayonnement ultra-violet.

Elles peuvent ainsi comprendre, de façon non limitative, une lampe tubulaire ou plate à rayons ultraviolets ou une pluralité de diodes électroluminescentes.

Dans un exemple non limitatif, les sources lumineuses 62 émettent dans les longueurs d'onde de 254 nm.

Dans un mode de réalisation non limitatif de l'invention, la source lumineuse 62 est apte à émettre une puissance UV de 10 à 20 mW par cm² de surface irradiée.

Avantageusement, les lampes ou diodes électroluminescentes dépensent peu d'énergie. Par exemple, leur consommation est de l'ordre de 4 W à 80 W.

De cette manière, ces sources lumineuses permettent de coupler efficacité de dépollution catalytique et économie d'énergie.

Sous l'effet de la cellule photocatalytique 8, le flux d'air A traversant l'ensemble de purification 1 devient exempt des polluants chimiques et microbiologiques qui sont présents dans l'air ambiant.

La photocatalyse permet d'éliminer tous les composants tels que les composés organiques volatils, les odeurs, l'ozone, les bactéries et les moisissures, les virus, les aldéhydes, les spores, champignons, acariens allergènes en générant des radicaux hydroxyles très réactifs qui attaquent la protection organique des cellules et dégradent totalement les composants chimiques présents dans l'air.

Il n'y a par ailleurs aucune formation d'ozone grâce à l'utilisation de lampes dotées d'un verre qui filtre les longueurs d'ondes générées.

Le bloc cartouche 30 comprend, en outre, en aval de la cellule photocatalytique 8 un troisième module filtrant 9 adapté pour une filtration chimique de l'air déjà traité par photocatalyse. En d'autres termes, l'ensemble de purification 1 comprend un module de filtration chimique 9 en aval des cartouches 4, en regard de la circulation de l'air dans l'ensemble 1.

Selon la variante de réalisation illustré sur la figure 1, ce module de filtration chimique 9 est mis en place de façon concentrique avec le bloc cartouche 30, à l'extérieur des cartouches 4.

Toutefois, une variante de réalisation prévoit que le module de filtration chimique 9 soit mis en place de façon concentrique avec chaque filtre photocatalytique 80 dans chaque cartouche 30, entre le filtre photocatalytique 80 et la circonférence interne du corps 31 de la cartouche 30 associée.

De préférence, ce module de filtration chimique 9 est adapté pour réaliser une filtration chimique oxydative qui élimine toute émission d'aldéhydes.

On peut citer comme exemple non limitatif un filtre chimique comprenant un support en alumine chargé en permanganate de potassium à 8% qui élimine quantitativement le formaldheyde et les acide soufrés.

D'autres types de filtration chimiques sont également envisageables telles qu'une filtration chimique réductive, acide ou basique.

Des catalyseurs partilulièrement adaptés à cet usage sont ceux à base de zéolite, capables d'augmenter le rendement de la dépollution des matières organiques et des molécules odorantes. D'autres catalyseurs peuvent bien entendu être utilisés seuls ou en combinaison avec par exemples, des structures céramiques complexes, fibres synthétiques, fibre de carbone et couplage du dioxyde de titane avec d'autres oxydes catalytiques comme le dioxyde de zirconium permettant d'augmenter le rendement du catalyseur par unité de volume.

Le bloc cartouche 30 comprend, en outre, en aval de la cellule photocatalytique 8, et en aval du module de filtration chimique 9, un quatrième module de filtration 10 adapté pour une post filtration particulaire de l'air déjà traité par photocatalyse et traité chimiquement. Ce module de post filtration particulaire 10 en aval des cartouches 4, en regard de la circulation de l'air dans l'ensemble et situé soit dans la cartouche 4 de filtration soit à l'extérieur de cette dernière mais à l'intérieur du bloc cartouche 30, soit à l'extérieur du bloc cartouche 30. C'est cette dernière variante qui est illustré sur la figure 1.

Dans une variante de réalisation non illustrée, chaque cartouche 4 comprend l'ensemble des éléments consommables de l'ensemble de purification d'air 1 c'est-à-dire qu'elle intégre une pluralité de technologies efficaces pour le traitement de différentes classes de polluant de l'air de l'habitat intérieur où est placé l'ensemble de purification d'air 1.

Ainsi, par exemple, chaque cartouche peut intégrer la cellule photocatalytique 8 mais également un module de préfiltration 6 et/ou un module de filtration chimique 9 et/ou un module de post filtration particulaire 10 dans sa concavité.

Cela simplifie le remplacement de cartouches et permet d'éviter tout contact entre les filtres et la main de l'opérateur qui remplace la cartouche, supprimant ainsi tout risque de contamination des mains de l'opérateur.

Alternativement, c'est le bloc cartouche lui-même qui comprend l'ensemble des éléments consommables de l'ensemble de purification d'air 1 c'est-à-dire qu'il intégre une pluralité de technologies efficaces pour le traitement de différentes classes de polluant de l'air de l'habitat intérieur où est placé l'ensemble de purification d'air 1.

Dans ce cas, par exemple, le bloc cartouche peut intégrer le module de préfiltration 6 et/ou un module de filtration chimique 9 et/ou un module de post filtration particulaire 10 dans la concavité de son enceinte intermédiarie 3, ces modules étant alors communs à toutes les cartouches.

Cette variante est particulièrement avantageuse s'il est prévu de pouvoir rempalcer intégralement le bloc cartouche.

Par ailleurs, le bloc cartouche 30 est relié à une alimentation arrivant dans l'enceinte 2 par une connexion adaptée, notamment pour alimenter les sources lumineuses 81.

Concernant l'alimentation du groupe motoventilateur 7 et de la source lumineuse 81, un mode de réalisation prévoit une alimentation électrique extérieure du type branchement sur secteur.

Un branchement adapté mis en place dans l'enceinte 2 de l'ensemble 1 permet de brancher la ou les sources lumineuses 62 lorsque le bloc cartouche 30 est mis en place dans l'enceinte 2.

Dans un autre mode de réalisation, la source lumineuse 81 et le groupe moto-ventilateur 7 peuvent être alimentés par un accumulateur d'énergie 50 (voir figure 5) placé dans l'embase 23 de l'enceinte 2.

Dans une configuration possible, l'accumulateur d'énergie (non illustré) est maintenu en charge et rechargeable par des moyens de production d'énergie électrique à partir d'énergie renouvelable intégré à l'ensemble.

Dans un exemple non limitatif, l'ensemble de purification d'air 1 peut comprendre des moyens de production d'énergie électrique à partir d'énergie photovoltaïque.

Ces moyens comprennent des moyens pour capter l'énergie photovoltaïque et pour la transformer en énergie électrique stockée dans l'accumulateur d'énergie, lequel est destiné à fournir l'énergie nécessaire à la source lumineuse 81.

Grâce à de tels moyens de production d'énergie électrique à partir d'énergie renouvelable, on dispose d'un ensemble de purification d'air 1 économe en énergie.

Un mode de réalisation non illustré peut prévoir également une enceinte 2 adaptée pour recevoir plusieurs blocs cartouches 30.

Le fonctionnement de l'ensemble de purification d'air 10 selon la présente invention est le suivant, en relation avec la figure 4, l'entrée d'air se situant au niveau du groupe moto-ventilateur 7.

Le flux d'air A ambiant d'une pièce est dirigé et canalisé vers le groupe moto- ventilateur 7.

Sur son chemin, il traverse le module de préfiltration particulaire 6. Les polluants solides présents dans le flux d'air A sont alors fixés par ce module de préfiltration particulaire 6.

Le flux d'air A pré filtré traverse, ensuite, la cellule photocatalytique 8.

La source lumineuse 81 émet un faisceau lumineux ultraviolet en direction du filtre photocatalytique 80.

L'agent catalyseur photosensible irradié par le rayonnement ultraviolet réagit alors avec les polluants présents dans le flux d'air A pré filtré, et, par réaction de catalyse avec les rayons ultraviolets, élimine définitivement les polluants qui le traversent.

Cela est renforcé par la source lumineuse 81 à effet germicide qui permet de stériliser le flux d'air A pré filtré.

Le flux d'air A ainsi stérilisé se dirige vers le module de filtrage chimique 9 pour éliminer les éléments polluants restant et se dirige vers le module de post filtration particulaire 10 puis se dirige vers la sortie de l'enceinte 2, par exemple dans la pièce.

Le remplacement d'une cartouche 30 de filtration est effectué de la façon suivante :
- on démonte un système de fixation aussi appelé « anti bypass » qui permet de renforcer le maintien du bloc cartouche 30 dans l'enceinte 2 de l'ensemble de purification 1 ;
- on déconnecte les sources lumineuses 81 de l'alimentation ; puis
- on fait tourner d'un quart de tour le bloc cartouche 30 par rapport à l'enceinte 2 autour de son axe longitudinal, et on extrait l'ensemble 30 de l'enceinte 2.

Pour mettre en place une nouvelle cartouche 30, les étapes précédentes sont à réaliser de façon inversée.

Ainsi, l'ensemble 30 comprenant les trois cartouches photocatalytiques est facilement amovible par exemple grâce au système de fixation par vissage à un quart de tour (de préférence avec détrompeur). C'est l'ensemble 30 qui se remplace, évitant ainsi tout risque de contact direct de l'opérateur avec les cartouches photocatalytiques 4.

L'invention propose un ensemble de purification 10 dans lequel le remplacement d'une cartouche, et/ou de préférénce du bloc cartouche 30, est simple et rapide tout en protégeant l'opérateur des polluants piégés dans les filtres des cartouches 4 usagées.

Dans une variante de réalisation, on propose un ensemble de purification d'air 1 comprenant des moyens de radio identification des cartouches 4 (ou du bloc cartouche 30) mises en place dans l'enceinte 2, de type RFID Radio Frequency Identification en terminologie anglo saxonne pour la reconnaissance et la traçabilité des cartouches.

Ainsi, les cartouches 4 peuvent être munies de radio étiquettes destinées à coopérer avec des lecteurs adaptés pour mémoriser les données de l'ensemble de purification d'air 10 concernant la filtration installée.

Ainsi, on offre l'avantage de pouvoir sélectionner une utilisation particulière de l'ensemble de purification d'air 10 adaptée en fonction de la cartouche 4 installée comme un débit d'air particulier et une vitesse du ventilateur 24 particulière en fonction de la cartouche 4.

Selon l'invention, chacune des cartouches est munie, à son entrée, d'un mécanisme d'ouverture et de fermeture 5 permettant respectivement de laisser l'air circuler ou bloquer la circulation d'air à travers la cartouche associée, les mécanismes d'ouverture et de fermeture 5 étant commandé par des moyens de commande (non illustrés) configurés pour ouvrir et fermer distinctement ou en combinaison les cartouches de sorte à adapter le débit d'air en fonction de paramètres prédéterminés de la qualité de l'air à purifier.

Pour améliorer encore l'efficacité de l'ensemble 1 en fonction des paramètres prédéterminés de la qualité de l'air à purifier, au moins un des filtres des modules de filtration chimique 9 aval et de post filtration particulaire 10 aval est amovible entre une position active où il est disposé sur le chemin de l'air circulant dans l'ensemble de purification 1 de sorte à être traversé par cet air et une position inactive où il n'assure pas la filtration de l'air, ces positions active et inactive étant commandées par les moyens de commande.

Les paramètres de la qualité de l'air à purifier sont mesurés par une pluralités de capteurs, permettant de mesurer par exemple :
- des paramètres de bases, tels que la température, l'humidité ou l'humidité relative et la pression atmosphérique ;
- la présence de polluants, parmis lesquels par exemple : les composés organiques volatils (COV), les composés organiques halogènes volatils (COHV), les aldéhydes, l'ammoniac, le sulfure d'hydrogène, les mercaptans, les particules fines, les monoxydes et dioxyde de carbone.

Les moyens de commande de l'ensemble de purification 1 comprennent une unité de commande intégré audit ensemble de purification 1 recevant les données de chacun des capteurs et permettant de commander le débit de l'ensemble de purification 1 aux niveaux de pollution mesurés dans la pièce ainsi que les types de traitement de l'air pollué nécessaire à la purification de l'air.

L'ensemble de purification 1 est asservi à la fois niveau de son débit aux niveaux de pollution dans la pièce et à la mesure des particules fines et de gaz dans l'air.

Les signaux sont traités par le l'unité de commande embarquée dans l'ensemble de purification 1. Les différents modes de fonctionnement du dépollueur d'air sont de préférence paramétrés préalablement avant son installation et sa mise en fonctionnement, par exemple en usine, pour être adapté au mieux en fonction du marché professionnel de destination. De cette manière, plusieurs modes de fonctionnements sont pré-enregistrés dans une mémoire du moyen de commande de sorte à ce que l'ensemble de purification 1 fonctionne conformément à ces modes de fonctionnement en fonction des mesures des capteurs.

Chaque mode de fonctionnement est paramétré pour être adapté à des configurations particulières d'air à traiter.

Selon un exemple de réalisation, un mode de fonctionnement de base est le suivant :
- au démarrage les clapets formant mécanisme d'ouverture et de fermeture 5 sont ouverts et les modules de filtration chimique 9 aval et de post filtration particulaire 10 aval sont en position active. Ce mode de fonctionnement garantit une dépollution de l'air complète, rapide et efficace.
- dès que le ou les capteurs enregistre(nt) une baisse de la pollution de l'air intérieur, par exemple des valeurs mesurées inférieures à 10% des valeurs guides de l'air intérieur (VGAI), deux clapets 5 se ferment et les modules de filtration chimique 9 et de post filtration particulaire 10 en aval passent en position inactive laissant passer l'air dépollué plus facilement (réduction des pertes de charges et donc de la consommation d'énergie).

Si le ou les capteurs détecte(nt) une pollution aux particules fines, module de post filtration particulaire 10 revient en position active.

Si le ou les capteurs détecte(nt)une pollution chimique spécifique (acidité dans l'air, composés chlorés, ammoniac, ...), le module de filtration chimique 9 aval revient en position active.

Le moyen de commande de l'ensemble de purification 1 commande le ventilateur 7 de sorte à adapter son débit de façon proportionnelle en fonction des modes de fonctionnement. Tout passage d'un mode de fonctionnement à un autre est de préférence temporisé.

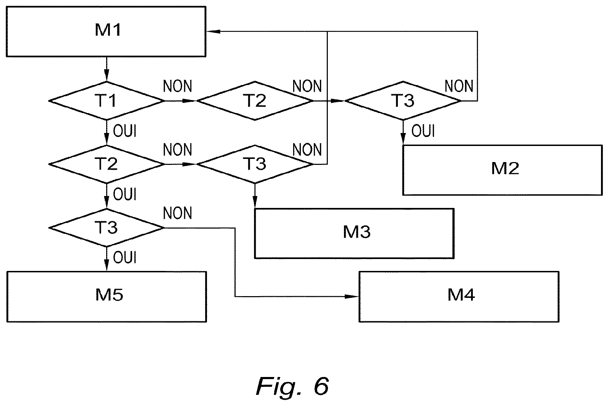

En référence à la figure 6, qui illustre un logigramme présentant des exemples de mise en oeuvre en fonction des valeurs de pollution de l'air intérieur, cinq modes de fonctionnement sont ici détailés :
- Mode M1 dit mode « éco » : l'ensemble de purification 1 fonctionne de sorte à assurer un faible débit et avec une seule cartouche 4 ouverte traversée par l'air à dépolluer et une seule cellule photocatalytique 8 activée, les modules de filtration chimique 9 et de post filtration particulaire 10 étant en position inactive ;
- Mode M2 dit mode « dust » : l'ensemble de purification 1 fonctionne de sorte à assurer un fort débit toujours avec une seule cartouche 4 ouverte traversée par l'air à dépolluer et une seule cellule photocatalytique 8 activée, mais avec le module de post filtration particulaire 10 activé pour faire descendre le niveau de concentration des poussières à l'air intérieur ;

- Mode M3 dit mode « fast 1 » : l'ensemble de purification 1 fonctionne de sorte à assurer un débit moyen avec deux cartouches 4 ouvertes traversées par l'air à dépolluer et deux cellules photocatalytiques 8 activées en plus du module de filtration chimique 9 en position active (pour faire descendre plus efficacement la concentration de COV) et du module de post filtration particulaire 10 pour les poussières.
- Mode M4 dit mode « fast 2 » : l'ensemble de purification 1 fonctionne de sorte à assurer un débit moyen avec deux cartouches 4 ouvertes traversées par l'air à dépolluer et deux cellules photocatalytiques 8 activées en plus du module de filtration chimique 9 en position active, pour faire descendre plus efficacement la concentration de COV et d'ammoniac à l'air intérieur, le module de post filtration particulaire 10 étant en position inactive.
- Mode M5 dit mode « turbo » : l'ensemble de purification 1 fonctionne de sorte à assurer un fort débit avec toutes les cartouches 4 ouvertes, au nombre de trois, traversées par l'air à dépolluer et toutes les cellules photocatalytiques 8 activées, également au nombre de trois (chaque cartouche étant associée à une cellule photocatalytique), en plus des deux modules de post-filtration à savoir les modules de filtration chimique 9 et de post filtration particulaire 10 afin de réduire de façon très efficace tous les polluants à l'air intérieur (cas d'une pièce très polluée).

Selon le mode de réalisation illustré sur la figure 6, ces modes de fonctionnement sont actifs en fonctions de paramètres mesurés et comparés à des paramètres prédéterminés de la qualité de l'air à purifier.

Par exemple, trois étapes de tests peuvent être mises en oeuvre, parmis lesquelles :
- une première étape T1 de comparaison des valeurs mesurées de la concentration de COV par rapport à une valeur seuil : par exemple, la valeur mesurée de COV dans l'air pollué est-elle supérieure à 5 ppm ?
- une deuxième étape T2 de comparaison des valeurs mesurées de la concentration d'amoniac : par exemple, la valeur mesurée de NH₃ dans l'air pollué est elle supérieure à 50 µg/m³?
- une troisième étape T3 de comparaison des valeurs mesurées de la concentration de poussières : par exemple, la valeur mesurée de poussières PM10 dans l'air pollué est elle supérieure à 500 µg/m³?

En fonction des tests de concentrations T1, T2 et T3, un mode de fonctionnement sera choisi conformément au logigrame de la figure 6.

Comme nous venons de le voir, l'invention concerne un procédé de pilotage d'un ensemble de purification d'air 1 tel que décrit ci-avant, au cours duquel les moyens de commande reçoivent, en provenance du système de mesure, des mesures des paramètres représentatifs de la qualité de l'air à purifier, et les moyens de commande commandent les mécanismes d'ouverture et de fermeture 5 des cartouches 4 pour ouvrir et fermer distinctement ou en combinaison les cartouches 4 de sorte à adapter le débit d'air en fonction des paramètres représentatifs de la qualité de l'air à purifier.

De façon générale, le procédé de pilotage, comprend la mise en oeuvre d'une pluralité d'étapes de vérification de la qualité de l'air (telles que les étapes T1, T2 et T3) mises en oeuvre successivement, de sorte à ce qui les moyens de commande de l'ensemble de purification d'air 1 assurent son fonctionnement dans un mode de fonctionnement prédéterminé.

Ces modes de fonctionnement prédéterminés varient notamment par l'adaptation du débit d'air en fonction de paramètres prédéterminés de la qualité de l'air à purifier, en faisant varier de préférence :
- la puissance du moyen 7 pour réaliser une circulation d'air forcée dans l'enceinte, soit la vitesse de rotation du ventilateur ;
- les positions active ou inactive des modules de filtration chimique 9 et de post filtration particulaire 10, voire du module de préfiltration particulaire 6 lorsqu'il est amovible et plus généralement de tout autre module de filtration qui équiperait l'ensemble 1 et qui serait configuré pour être amovible entre les positions active et inactive ;
- l'activation des cellules photocatalytiques 8, notamment par l'activation de leurs sources lumineuses 81 ;
- l'ouverture ou la fermeture des clapets 5 formant mécanismes d'ouverture et de fermeture 5 commandés indépendamment les uns des autres par les moyens de commande.

Cette commande de fermeture et d'ouverture de chacune des cartouches par les moyens de commande, ceci individuellement, permet une gestion particulièrement améliorée du débit en garantissant une économie d'énergie importante comparativement aux solutions de l'art antérieur.

L'homme de l'art appréciera, par rapport aux ensembles de purification de l'art antérieur, un ensemble polyvalent permettant, par remplacement de cartouches de filtration et/ou de bloc cartouches spécifiques, de s'adapter au lieu dans lequel il est placé de façon simple et rapide tout en assurant une efficacité de purification de l'air intérieur parfaitement adapté et spécifique au type et au taux de pollution.

Il appréciera, également, un ensemble facile d'entretien et peu gourmand en place et en énergie du fait de tenir compte spécifiquement des besoins de pièce dont l'air doit être dépolluer, simple de conception et d'installation, et pouvant être utilisé par toute personne dans tout lieu de vie où une purification de l'air intérieur est souhaitée.

En outre, le bloc cartouches 30 peut équiper un ensemble de purification d'air tel que décrit ci-avant dans une installation neuve, mais peut aussi être installé sur un circuit de purification d'air existant, permettant ainsi d'offrir ainsi un ensemble de purification d'air dans lequel lesdites cartouches sont configurées pour être traversées en parallèle par l'air pollué circulant dans l'enceinte pour le purifier, les cartouches étant ouvertes et/ou fermées individuellement par les moyens de commande de sorte à adapter le débit d'air de l'ensemble en fonction de paramètres prédéterminés de la qualité de l'air à purifier.

Dans l'exemple illustré, le bloc cartouche 30 est dimensionné pour accueillir des débits de l'ordre de 1000 m³/h, et peut être intégré à l'intérieur des gaines existantes des Centrales de Traitement d'Air (CTA) des bâtiments.

L'invention est décrite dans ce qui précède à titre d'exemple. Il est entendu que l'homme du métier est à même de réaliser différentes variantes de réalisation de l'invention sans pour autant sortir du cadre de l'invention.

Par exemple, l'ensemble de purification d'air 1 peut comporter à sa sortie des déflecteurs permettant à l'air en sortie d'être dirigé dans une direction souhaitée, au moyen par exemple d'ailettes, de coudes, ou tout autre déflecteurs adapté à cet usage

Par ailleurs, le nombre de cartouches équipant l'ensemble de purification et/ou le bloc cartouche, peut varier. Par exemple il pourra intégrer sept cartouches disposées en parallèle sur le chemin de l'air circulant dans l'ensemble. Ce nombre peut varier en fonction des dimensions de l'équipement en fonction de son usage et des dimensions des cartouches, de sorte à limiter en outre les pertes de charge.

## Revendications

1. Ensemble de purification d'air (1) comprenant :
- une enceinte (2) comprenant une entrée d'air (E) pour le passage d'un air pollué, une sortie d'air (S) pour le passage d'un air purifié et une embase (23) munie d'un moyen (7) pour réaliser une circulation d'air forcée dans l'enceinte (2), tel qu'un ventilateur,
- une pluralité de cartouches (4) amovibles logées dans ladite enceinte (2), lesdites cartouches (4) étant adaptée pour être traversées en parallèle par l'air pollué circulant dans l'enceinte (2) pour le purifier,
chacune des cartouches (4) étant munie, à son entrée, d'un mécanisme d'ouverture et de fermeture (5) configurable entre une configuration ouverte et une configuration fermée permettant respectivement de laisser l'air circuler ou de bloquer la circulation d'air à travers la cartouche associée,
ledit ensemble de purification d'air (1) comprenant en outre :
- un système de mesure pour mesurer des paramètres représentatifs de la qualité de l'air à purifier;
- des moyens de commande reliés au système de mesure et au mécanisme d'ouverture et de fermeture (5) de chacune des cartouches (4), lesdits moyens de commande étant configurés pour commander les mécanismes d'ouverture et de fermeture (5) afin d'ouvrir et fermer individuellement, par exemple distinctement ou en combinaison, les cartouches (4) de sorte à adapter le débit d'air en fonction des paramètres représentatifs de la qualité de l'air à purifier ;
où ledit ensemble de purification d'air (1) comprend au moins un module de filtration aval (9 ; 10) disposé en aval des cartouches (4), en regard de la circulation de l'air dans l'ensemble, et dans lequel le module de filtration aval (9 ; 10) est amovible entre une position active où il est disposé sur le chemin de l'air circulant dans l'ensemble de purification (1) de sorte à être traversé par cet air et une position inactive où il n'assure pas la filtration de l'air, ces positions active et inactive étant commandées par les moyens de commande en fonction d'au moins un paramètre représentatif de la qualité de l'air à purifier.

2. Ensemble de purification d'air (1) selon la revendication 1, dans lequel les cartouches (4) sont disposées seules sur une section intermédiaire d'écoulement de l'air dans l'enceinte (2), de sorte que l'air pollué entrant dans l'enceinte (2) traverse ladite section intermédiaire en circulant uniquement à travers la ou les cartouches (4) dont le mécanisme d'ouverture et de fermeture (5) est en configuration ouverte.

3. Ensemble de purification d'air (1) selon l'une quelconque des revendications 1 et 2, dans lequel les cartouches (4) sont placées parallèlement les unes par rapport aux autres selon des directions respectives parallèles à un axe principal de circulation de l'air à purifier, et les cartouches (4) sont réparties symétriquement autour de cet axe principal.

4. Ensemble de purification d'air (1) selon la revendication 3, dans lequel l'axe principal est concentrique par rapport à l'entrée (E) et la sortie (S) de l'enceinte (2).

5. Ensemble de purification d'air (1) selon l'une quelconque des revendications précédentes, dans lequel chacune des cartouches (4) comprend au moins une cellule photocatalytique (8) consommable présentant un filtre photocatalytique (80) et une source lumineuse (81) destinée à irradier ledit filtre photocatalytique (80).

6. Ensemble de purification d'air (1) selon l'une quelconque des revendications précédentes, dans lequel au moins un module de filtration aval est un module de filtration chimique (9).

7. Ensemble de purification d'air (1) selon la revendication 6, dans lequel le système de mesure comprend un moyen de mesure d'un taux de pollution chimique, et le module de filtration chimique (9) est amovible entre une position active et une position inactive, ces positions active et inactive étant commandées par les moyens de commande en fonction de ce taux de pollution chimique.

8. Ensemble de purification d'air (1) selon la revendication 7, dans lequel le moyen de mesure d'un taux de pollution chimique est conformé pour mesurer une présence d'au moins un polluant choisi parmi les composés organiques volatils, les composés organiques halogènes volatils, les aldéhydes, l'ammoniac, le sulfure d'hydrogène, les mercaptans, les monoxydes et dioxyde de carbone.

9. Ensemble de purification d'air (1) selon l'une quelconque des revendications précédentes, dans lequel un module de filtration aval est un module de post filtration particulaire (10).

10. Ensemble de purification d'air (1) selon la revendication 9, dans lequel le système de mesure comprend un moyen de mesure d'un taux de pollution aux particules fines, et le module de post filtration particulaire (10) est amovible entre une position active et une position inactive, ces positions active et inactive étant commandées par les moyens de commande en fonction de ce taux de pollution aux particules fines.

11. Ensemble de purification d'air (1) selon l'une des quelconque revendications précédentes, comprenant un module de préfiltration particulaire (6) en amont des cartouches (4), en regard de la circulation de l'air dans l'ensemble (1).

12. Ensemble de purification d'air (1) selon la revendication 11, dans lequel une distance axiale dans une direction de circulation du flux d'air entre le module de préfiltration particulaire (6) amont et le moyen (7) pour réaliser la circulation d'air forcée est sensiblement égale à une distance entre l'entrée des cartouches (4) et ledit moyen (7) pour réaliser la circulation d'air forcée.

13. Procédé de pilotage d'un ensemble de purification d'air (1) selon l'une quelconque des revendications 1 à 12, au cours duquel les moyens de commande reçoivent, en provenance du système de mesure, des mesures des paramètres représentatifs de la qualité de l'air à purifier, et les moyens de commande commandent les mécanismes d'ouverture et de fermeture (5) des cartouches (4) pour ouvrir et fermer distinctement ou en combinaison les cartouches (4) de sorte à adapter le débit d'air en fonction des paramètres représentatifs de la qualité de l'air à purifier, et les moyens de commande commandent les positions active et inactive de l'au moins module de filtration aval (9 ; 10) en fonction d'au moins un paramètre représentatif de la qualité de l'air à purifier.

## Patentansprüche

1. Luftreinigungseinheit (1), umfassend:
- ein Gehäuse (2), das einen Lufteinlass (E) für den Durchgang einer verschmutzten Luft umfasst, einen Luftauslass (S) für den Durchgang einer gereinigten Luft und ein Unterteil (23), das mit einem Mittel (7) versehen ist, um eine forcierten Luftzirkulation innerhalb des Gehäuses (2) durchzuführen, wie zum Beispiel einen Ventilator,
- eine Vielzahl von verschiebbaren Kartuschen (4), die im Gehäuse (2) untergebracht sind, wobei die Kartuschen (4) dazu geeignet sind, parallel durch die verschmutzte Luft durchdrungen zu werden, die im Gehäuse (2) zirkuliert, um sie zu reinigen,
wobei jede der Kartuschen (4) an ihrem Einlass mit einem Öffnungs- und Schließmechanismus (5) versehen ist, der konfigurierbar ist zwischen einer offenen Konfiguration und einer geschlossenen Konfiguration, was ermöglicht, die Luft durch die zugehörige Kartusche zirkulieren zu lassen beziehungsweise die Luftzirkulation zu blockieren,
wobei die Luftreinigungseinheit (1) ferner umfasst:
- ein Messsystem zur Messung von Parametern, die für die Qualität der zu reinigenden Luft repräsentativ sind;
- Steuermittel, die mit dem Messsystem und dem Öffnungs- und Schließmechanismus (5) jeder der Kartuschen (4) verbunden sind, wobei die Steuermittel konfiguriert sind, um die Öffnungs- und Schließmechanismen (5) zu steuern, um die Kartuschen (4) individuell zu öffnen und zu schließen, beispielsweise getrennt oder in Kombination, um die Luftfördermenge in Abhängigkeit der Parameter anzupassen, die für die Qualität der zu reinigenden Luft repräsentativ sind;
wobei die Luftreinigungseinheit (1) mindestens ein nachgeschaltetes Filtermodul (9; 10) umfasst, das stromabwärts der Kartuschen (4) gegenüber der Luftzirkulation in der Einheit angeordnet ist, und wobei das nachgeschaltete Filtermodul (9; 10) verschiebbar ist zwischen einer aktiven Position, in der es auf dem Weg der Luft angeordnet ist, die durch die Reinigungseinheit (1) zirkuliert, so dass es von dieser Luft durchdrungen wird, und einer inaktiven Position, in der es keine Luftfilterung gewährleistet, wobei diese aktiven und inaktiven Positionen von den Steuermitteln in Abhängigkeit von mindestens einem Parameter gesteuert werden, der für die Qualität der zu reinigenden Luft repräsentativ ist.

2. Luftreinigungseinheit (1) nach Anspruch 1, wobei die Kartuschen (4) einzeln auf einem Zwischenabschnitt der Luftströmung im Gehäuse (2) angeordnet sind, so dass die verschmutzte Luft, die in das Gehäuse (2) eintritt, den Zwischenabschnitt durchdringt und nur durch die Kartusche(n) (4) zirkuliert, deren Öffnungs- und Schließmechanismus (5) sich in der offenen Konfiguration befindet.

3. Luftreinigungseinheit (1) nach einem der Ansprüche 1 und 2, wobei die Kartuschen (4) parallel zueinander in jeweiligen Richtungen parallel zu einer Hauptachse der Zirkulation der zu reinigenden Luft positioniert sind, und die Kartuschen (4) symmetrisch um diese Hauptachse verteilt sind.

4. Luftreinigungseinheit (1) nach Anspruch 3, wobei die Hauptachse konzentrisch zum Einlass (E) und Auslass (S) des Gehäuses (2) ist.

5. Luftreinigungseinheit (1) nach einem der vorhergehenden Ansprüche, wobei jede der Kartuschen (4) mindestens eine verbrauchbare Photokatalysezelle (8) umfasst, die einen Photokatalysefilter (80) aufweist und eine Lichtquelle (81), die dazu bestimmt ist, den Photokatalysefilter (80) zu bestrahlen.

6. Luftreinigungseinheit (1) nach einem der vorhergehenden Ansprüche, wobei mindestens ein nachgeschaltetes Filtermodul ein chemisches Filtermodul (9) ist.

7. Luftreinigungseinheit (1) nach Anspruch 6, wobei das Messsystem ein Mittel zum Messen einer chemischen Verschmutzungsrate umfasst, und das chemische Filtermodul (9) verschiebbar ist zwischen einer aktiven Position und einer inaktiven Position, wobei diese aktiven und inaktiven Positionen von den Steuermitteln in Abhängigkeit von dieser chemischen Verschmutzungsrate gesteuert werden.

8. Luftreinigungseinheit (1) nach Anspruch 7, wobei das Mittel zur Messung einer chemischen Verschmutzungsrate ausgelegt ist, um ein Vorhandensein von mindestens einem Schadstoff zu messen, der ausgewählt ist aus flüchtigen organischen Verbindungen, flüchtigen halogenorganischen Verbindungen, Aldehyden, Ammoniak, Schwefelwasserstoff, Merkaptanen, Monoxiden und Kohlendioxid.

9. Luftreinigungseinheit (1) nach einem der vorhergehenden Ansprüche, wobei ein nachgeschaltetes Filtermodul ein Partikelnachfiltermodul (10) ist.

10. Luftreinigungseinheit (1) nach Anspruch 9, wobei das Messsystem ein Mittel zum Messen einer Verschmutzungsrate von Feinpartikeln umfasst, und das Partikelnachfiltermodul (10) verschiebbar ist zwischen einer aktiven und einer inaktiven Position, wobei diese aktiven und inaktiven Positionen durch die Steuermittel in Abhängigkeit von dieser Verschmutzungsrate von Feinpartikeln gesteuert werden.

11. Luftreinigungseinheit (1) nach einem der vorhergehenden Ansprüche, ein Partikelvorfiltermodul (6) stromaufwärts der Kartuschen (4) gegenüber der Luftzirkulation in der Einheit (1) umfassend.

12. Luftreinigungseinheit (1) nach Anspruch 11, wobei ein axialer Abstand in einer Zirkulationsrichtung des Luftstroms zwischen dem vorgeschalteten Partikelvorfiltermodul (6) und dem Mittel (7) zur Durchführung der forcierten Luftzirkulation im Wesentlichen gleich einem Abstand zwischen dem Einlass der Kartuschen (4) und dem Mittel (7) zur Durchführung der forcierten Luftzirkulation ist.

13. Verfahren zum Ansteuern einer Luftreinigungseinheit (1) nach einem der Ansprüche 1 bis 12, wobei die Steuermittel vom Messsystem Messungen der Parameter empfangen, die für die Qualität der zu reinigenden Luft repräsentativ sind, und die Steuermittel die Öffnungs- und Schließmechanismen (5) der Kartuschen (4) steuern, um die Kartuschen (4) getrennt oder in Kombination zu öffnen und zu schließen, um die Luftfördermenge in Abhängigkeit der Parameter anzupassen, die für die Qualität der zu reinigenden Luft repräsentativ sind, und die Steuermittel die aktiven und inaktiven Positionen von mindestens dem nachgeschalteten Filtermodul (9; 10) in Abhängigkeit von mindestens einem Parameter steuern, der für die Qualität der zu reinigenden Luft repräsentativ ist.

## Claims

1. An air purification assembly (1) comprising:
- a chamber (2) comprising an air inlet (E) for the passage of a polluted air, an air outlet (S) for the passage of a purified air and a base (23) provided with means (7) for carrying out a forced air circulation in the chamber (2), such as a fan,
- a plurality of removable cartridges (4) housed in said chamber (2), said cartridges (4) being adapted to be traversed in parallel by the polluted air circulating in the chamber (2) in order to purify it,
each of the cartridges (4) being provided, at the inlet thereof, with an opening and closing mechanism (5) configurable between an open configuration and a closed configuration for respectively allowing the air to circulate or for blocking the circulation of air through the associated cartridge,
said air purification assembly (1) further comprising:
- a measurement system for measuring parameters representative of the quality of the air to be purified;
- control means connected to the measurement system and to the opening and closing mechanism (5) of each of the cartridges (4), said control means being configured to control the opening and closing mechanisms (5) in order to open and close individually, for example distinctly or in combination, the cartridges (4) so as to adapt the air flow rate depending on the parameters representative of the quality of the air to be purified;
wherein said air purification assembly (1) comprises at least one downstream filtration module (9; 10) disposed downstream of the cartridges (4), in the front of the air circulation inside the assembly, and wherein the downstream filtration module (9; 10) is removable between an active position where it is disposed on the path of the air circulating inside the purification assembly (1) so as to be traversed by this air and an inactive position where it does not ensure the filtration of the air, these active and inactive positions being controlled by the control means depending on at least one parameter representative of the quality of the air to be purified.

2. The air purification assembly (1) according to claim 1, wherein the cartridges (4) are disposed alone on an intermediate air flow section in the chamber (2), such that the polluted air entering the chamber (2) passes through said intermediate section by circulating only through the cartridge(s) (4) whose opening and closing mechanism (5) is in the open configuration.

3. The air purification assembly (1) according to any one of claims 1 and 2, wherein the cartridges (4) are placed parallel to each other in respective directions parallel to a main axis of circulation of the air to be purified, and the cartridges (4) are symmetrically distributed around this main axis.

4. The air purification assembly (1) according to claim 3, wherein the main axis is concentric relative to the air inlet (E) and the air outlet (S) of the chamber (2).

5. The air purification assembly (1) according to any one of the preceding claims, wherein each of the cartridges (4) comprises at least one consumable photocatalytic cell (8) having a photocatalytic filter (80) and a light source (81) intended to irradiate said photocatalytic filter (80).

6. The air purification assembly (1) according to any one of the preceding claims, wherein at least one downstream filtration module is a chemical filtration module (9).

7. The air purification assembly (1) according to claim 6, wherein the measurement system comprises means for measuring a chemical pollution rate, and the chemical filtration module (9) is removable between an active position and an inactive position, these active and inactive positions being controlled by the control means depending on this chemical pollution rate.

8. The air purification assembly (1) according to claim 7, wherein the means for measuring a chemical pollution rate is designed to measure a presence of at least one pollutant selected from the volatile organic compounds, the volatile halogenated organic compounds, aldehydes, ammonia, hydrogen sulfide, mercaptans, monoxides and carbon dioxide.

9. The air purification assembly (1) according to any of the preceding claims, wherein a downstream filtration module is a particulate post filtration module (10).

10. The air purification assembly (1) according to claim 9, wherein the measurement system comprises means for measuring a fine particle pollution rate, and the particulate post filtration module (10) is removable between an active position and an inactive position, these active and inactive positions being controlled by the control means depending on this fine particle pollution rate.

11. The air purification assembly (1) according to any one of the preceding claims, comprising a particulate pre-filtration module (6) which is upstream of the cartridges (4), in the front of the air circulation inside the assembly (1).

12. The air purification assembly (1) according to claim 11, wherein an axial distance in a direction of circulation of the airflow between the upstream particulate pre-filtration module (6) and the means (7) for carrying out the forced air circulation is substantially equal to a distance between the inlet of the cartridges (4) and said means (7) for carrying out the forced air circulation.

13. A method for controlling an air purification assembly (1) according to any one of claims 1 to 12, during which the control means receive, from the measurement system, measurements of the parameters representative of the quality of the air to be purified, and the control means control the opening and closing mechanisms (5) of the cartridges (4) to open and close, distinctly or in combination, the cartridges (4) so as to adapt the air flow rate depending on the parameters representative of the quality of the air to be purified, and the control means control the active and inactive positions of the at least one downstream filtration module (9; 10) depending on at least one parameter representative of the quality of the air to be purified.
